# FASCICULE DE BREVET EUROPEEN

(11) **EP 0 680 875 B1**
(45) Date de publication et mention de la délivrance du brevet: **01.04.1998**
(21) Numéro de dépôt: 95401000.5
(22) Date de dépôt: 02.05.1995
(51) Int. Cl.: B64C 27/82

(54) **Dispositif anti-couple à rotor arrière et stator redresseur carénés pour hélicoptère**
Gegendrehmomentvorrichtung mit einem eingelassenen Heckrotor und Abrichtrotor eines Hubschraubers
Anti-torque device with shrouded rotor and straightening stator for helicopters

(30) Priorité: 04.05.1994 FR 9405481
(43) Date de publication de la demande: 08.11.1995
(73) Titulaire: EUROCOPTER, F-13725 Marignane Cédex (FR)
(72) Inventeur: Dequin, André-Michel Louis, F-13100 Aix-en-Provence (FR); Daldosso, Louis Joseph, F-13100 Aix-en-Provence (FR); Barquet, Henri Fernand, F-13220 Chateauneuf-Les-Martigues (FR)
(74) Mandataire: Bérogin, Francis

(56) Documents cités:
- EP-A- 0 107 543
- FR-A- 2 559 423
- FR-A- 2 673 248
- US-A- 5 272 869

## Description

L'invention se rapporte à un dispositif anti-couple caréné, pour aéronef à voilure tournante, tel qu'un hélicoptère, du type connu par le brevet français FR 2 534 222, et comprenant :
- une veine sensiblement de révolution d'axe sensiblement transversal à l'axe longitudinal de l'aéronef, et traversant une carène dans la partie arrière de l'aéronef,
- un rotor multipale, monté sensiblement coaxial dans la veine et entraîné par un mécanisme d'entraînement en rotation fixé sensiblement coaxialement dans la veine, de sorte que la rotation du rotor engendre un flux d'air dans la veine, et
- un stator redresseur, fixé dans la veine en aval du rotor, par rapport au sens du flux d'air, et comportant un corps central annulaire, entourant le mécanisme d'entraînement en rotation, ainsi que des aubes fixes présentant chacune, entre un pied d'aube et un bout d'aube, une partie courante à profil aérodynamique redressant le flux d'air en aval du rotor vers l'axe de la veine, et s'étendant entre le corps central annulaire et une paroi annulaire de la veine, auxquels elles sont liées chacune respectivement par son pied et par son bout d'aube, de façon à supporter le mécanisme d'entraînement en rotation et le rotor dans la veine.

Le brevet précité décrit de plus que la veine est formée, en succession de l'amont vers l'aval, d'un convergent d'entrée, d'une partie cylindrique et d'un divergent, les pales du rotor tournant dans la partie cylindrique, et le support du rotor et du mécanisme d'entraînement en rotation dans la veine étant assuré soit par les aubes seules, soit par des bras de support sensiblement radiaux, soit enfin par des bras et les aubes, toujours sensiblement radiales. Le brevet précité décrit également un redresseur réalisé sous la forme d'un ensemble monolithique à pluralité d'aubes fixes et monté d'une seule pièce dans le divergent de la veine, dans lequel il s'adapte par emboîtement du côté de la sortie. Un tel redresseur comporte non seulement un corps annulaire ou une couronne interne, mais également une couronne externe concentrique, se logeant dans une empreinte du divergent, et munie d'une bride de fixation contre une face latérale de la carène, les aubes étant fixées radialement entre les couronnes interne et externe, les couronnes pouvant présenter des évidements de passage des bras supports, les aubes étant alors disposées entre les évidements.

Le but de l'invention est de perfectionner le dispositif anti-couple du type précité, de manière à améliorer la liaison mécanique entre la carène, le redresseur et le mécanisme d'entraînement en rotation supportant le rotor, afin d'introduire une plus grande rigidité dans le dispositif, pour garantir un bon positionnement du rotor dans la veine, et simultanément d'améliorer le rendement aérodynamique et les performances acoustiques du dispositif anti-couple.

En effet, on a constaté que le dispositif selon le brevet précité n'offrait pas toutes les garanties en matière de déformations locales du redresseur pour éviter toute interférence entre le redresseur et des pièces mobiles, et que la structure du redresseur n'était pas totalement favorable à une bonne liaison du mécanisme d'entraînement en rotation avec le bras de transmission le reliant à la source motrice.

Un autre but de l'invention est de perfectionner le dispositif anti-couple du type connu précité, afin de faciliter les opérations de maintenance, et notamment d'interchangeabilité du redresseur, ainsi que les interventions sur l'ensemble constitué du mécanisme d'entraînement en rotation et du rotor, et en particulier sur la dépose et le remontage de cet ensemble.

A cet effet, le dispositif anti-couple du type précité se caractérise en ce que son mécanisme d'entraînement en rotation est enveloppé dans un carter muni de bras de rigidification sensiblement radiaux, reliés les uns aux autres par une jante s'étendant en direction circonférentielle autour d'au moins une partie du carter, les bras de rigidification portant, à leur extrémité radiale externe, des moyens de fixation amovible coopérant avec des moyens de fixation complémentaires ménagés sur une bride radiale interne de fixation et de centrage du corps central annulaire du redresseur, de façon à fixer rigidement le redresseur et le carter l'un à l'autre et tous deux dans la veine.

Cette fixation très rigide permet de diminuer le jeu entre la paroi latérale de la veine et le bout des pales du rotor, dont la position est fermement maintenue dans la veine par la coopération du redresseur avec le carter des moyens d'entraînement en rotation. La diminution de ce jeu permet non seulement une poussée anti-couple accrue mais une meilleure fréquence propre de l'ensemble permettant de réduire le niveau vibratoire. De plus, la plus grande rigidité du dispositif est favorable à un meilleur accouplement du bras de transmission avec le mécanisme d'entraînement en rotation.

La rigidité recherchée est particulièrement assurée si le redresseur comporte au moins autant d'aubes que le carter comporte de bras de rigidification, et chaque bras est fixé au corps de redresseur sensiblement radialement à l'intérieur d'au moins un pied d'aube reliant l'aube correspondante audit corps de redresseur.

Dans une forme préférée de réalisation, les bras de rigidification sont aplatis en direction circonférentielle, inclinés du carter vers le corps de redresseur et de l'amont vers l'aval de la veine, et chacun renforcé par l'une au moins de nervures sensiblement radiales, de forme sensiblement triangulaire s'étendant vers l'aval dans la veine du côté du carter et s'amincissant vers le corps de redresseur et en nombre sensiblement égal aux aubes du redresseur.

Afin de réaliser un redresseur qui puisse être interchangeable, les aubes, creuses pour alléger le redresseur, peuvent être individuellement rapportées, par exemple de manière définitive par vissage ou rivetage, sur le corps de redresseur et, de manière amovible, par exemple par vissage, à la paroi latérale de la veine, à l'aide de pattes de fixation respectivement de leur pied et de leur bout d'aube.

Les aubes peuvent être métalliques, par exemple en un alliage d'aluminium, ou encore composites.

Dans ce dernier cas, chaque aube composite peut être effectivement creuse ou comporter un noyau de mousse, en particulier lorsqu'elle est réalisée par mise en forme de tissus de fibres de renfort préimprégnés d'une résine synthétique de rigidification autour du noyau de mousse. Mais l'aube peut également être moulée par transfert d'une résine époxyde sur des tissus de fibres de renfort, ou encore être injectée avec une armature de fibres courtes de renfort noyées dans une matrice de résine synthétique de rigidification.

En variante à des aubes, métalliques ou composites, individuellement rapportées sur le corps annulaire de redresseur, en alliage métallique, il est possible que les aubes et le corps de redresseur soient d'une seule pièce en matériau composite. Dans ce cas, le redresseur composite est de préférence une pièce monobloc moulée par compression et comprenant une armature de fibres courtes de renfort, de préférence de verre ou de carbone, noyées dans une matrice synthétique de rigidificaion, de préférence et respectivement une résine de vinylester ou une résine PEEK.

Afin de diminuer le bruit, par diminution des interactions du sillage des pales avec les aubes du redresseur, et afin simultanément de permettre une meilleure reprise du couple de réaction à la rotation du rotor et/ou un meilleur positionnement du rotor dans la veine, les aubes sont inclinées du corps de redresseur vers la paroi de la veine, par rapport à la direction radiale, dans le sens contraire au sens de rotation du rotor, et/ou en flèche de l'amont vers l'aval de la veine.

Pour faciliter les liaisons des aubes du redresseur avec la paroi latérale de la veine, il est avantageux que chaque aube soit reliée à cette dernière par fixation de son bout d'aube sur un insert scellé dans la paroi de la veine. L'insert peut être métallique (par exemple moulé en alliage d'aluminium, puis usiné) ou composite, en matière plastique injectée et armée de fibres courtes de renfort.

Pour une bonne retenue des inserts et une réalisation avantageusement simple, rigide et légère de la paroi latérale de la veine, cette dernière est de préférence d'une seule pièce en sandwich composite formant, entre deux rebords annulaires périphériques de raccordement à deux revêtements latéraux composites de carène, et en succession de l'amont vers l'aval, un convergent d'entrée, une partie cylindrique et un divergent auquel sont fixées les aubes, et qui comprend un revêtement intérieur et un revêtement extérieur entre lesquels s'étend une couche de nid d'abeilles, par exemple en nomex, dont l'épaisseur est supérieure dans le divergent à ce qu'elle est dans le convergent et la partie cylindrique, chacun des revêtements interne et externe, des rebords et des revêtements latéraux étant un stratifié d'au moins deux nappes superposées de tissus de fibres rigidifiées par une résine synthétique d'imprégnation, le revêtement interne étant d'une épaisseur supérieure à celle du revêtement externe, lui-même d'une épaisseur supérieure à celle des revêtements latéraux.

D'autres caractéristiques et avantages de l'invention découleront de la description donnée ci-dessous, à titre non limitatif, d'exemples de réalisation décrits en référence aux dessins annexés sur lesquels :
- la figure 1 est une vue en perspective de 3/4 arrière d'un dispositif anti-couple caréné, avec rotor et stator redresseur disposés dans une veine traversant la partie arrière d'un hélicoptère, le rotor étant représenté sorti de la veine avec arrachement partiel pour plus de clarté,
- la figure 2 est une vue partielle schématique du redresseur de la figure 1 en élévation latérale depuis l'entrée de la veine,
- la figure 3 est une demi-coupe diamétrale de l'ensemble logé dans la veine du dispositif de la figure 1,
- la figure 4 est une vue en élévation latérale du carter de la boîte de transmission arrière du rotor de la figure 1 et représentant sa face tournée vers la sortie de la veine,
- la figure 5 est une vue en coupe diamétrale du corps central annulaire de redresseur,
- la figure 6 représente schématiquement le corps de redresseur selon une coupe perpendiculaire à celle de la figure 5 ainsi qu'une demi-coupe axiale de la veine et de sa paroi latérale et une aube reliant cette dernière au corps de redresseur,
- les figures 7 et 8 représentent selon les flèches VII et VIII de la figure 2 les fixations respectivement du pied d'aube sur le corps de redresseur et du bout d'aube sur un insert dans la paroi latérale de la veine,
- la figure 9 représente schématiquement en élévation latérale partiellement coupée une variante de montage des aubes du redresseur,
- la figure 10 représente schématiquement, à plus grande échelle, une autre variante de montage d'une aube de redresseur,
- la figure 11 représente en partie en coupe et en partie en élévation latérale le montage d'aube de la figure 10,
- la figure 12 représente schématiquement et partiellement un redresseur monobloc composite vu d'un côté de la veine,
- les figures 13 et 14 sont des coupes selon XIII-XIII et XIV-XIV de la figure 12,
- la figure 15 est une vue selon la flèche XV de la figure 12, et
- la figure 16 est une vue selon la flèche XVI de la figure 15.

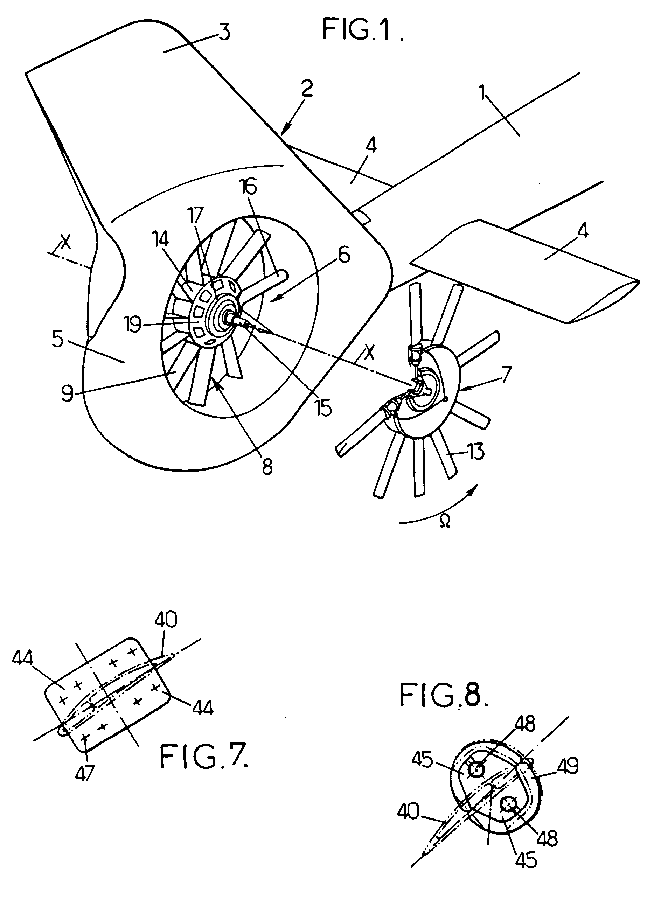

Sur la figure 1, la poutre de queue 1 d'un hélicoptère, dont le fuselage et l'unique rotor principal ne sont pas représentés, supporte à son extrémité arrière un empennage 2, dont la partie supérieure est aménagée en dérive verticale 3, et une dérive horizontale à deux plans 4 de part et d'autre de la poutre 1. La base de l'empennage 2 est agencée en carène 5 traversée transversalement par une veine 6 d'écoulement d'air d'un dispositif anti-couple caréné comprenant également un rotor 7 multipale à pas variable, monté rotatif et sensiblement coaxial dans la veine 6, ainsi qu'un stator redresseur 8, fixé en aval du rotor 7 dans la veine 6 par rapport au sens d'écoulement du flux d'air traversant cette dernière, et comportant des aubes fixes 9.

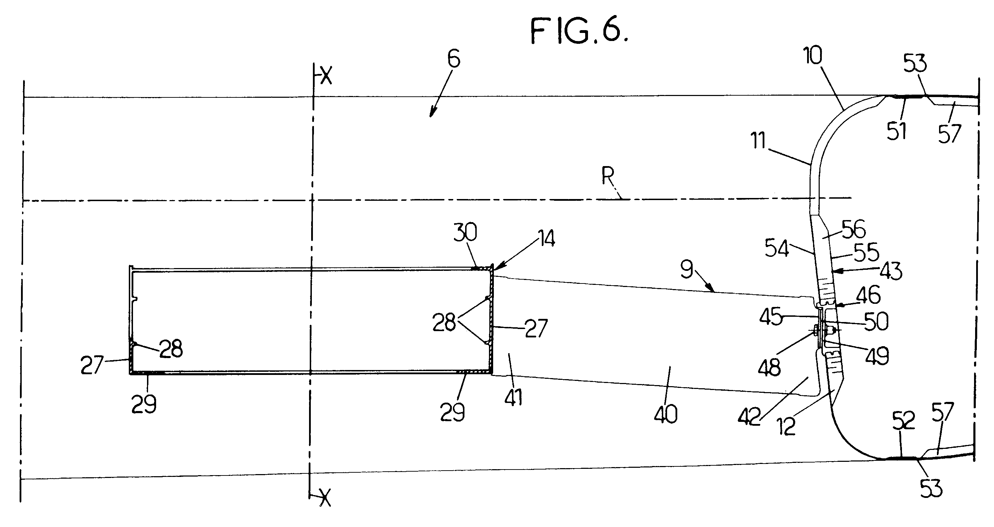

La veine 6 présente, autour de son axe X-X sensiblement transversal à l'axe longitudinal de l'hélicoptère, une forme pratiquement de révolution visible sur la figure 6, et comprenant, en succession de l'amont vers l'aval de la veine 6, un convergent d'entrée 10, à bord arrondi, puis une partie cylindrique 11, et un divergent 12, se terminant par une sortie de veine à bord arrondi. Le rotor 7 est monté dans la veine 6 du côté de l'entrée de celle-ci, et de sorte que ses pales 13 tournent dans la partie cylindrique 11 de la veine 6, les axes de changement de pas des pales 13 définissant un plan P de rotation du rotor, dans lequel ils se déplacent et qui est sensiblement perpendiculaire à l'axe X-X de la veine carénée 6. De manière connue, le rotor 7 est monté et entraîné en rotation par une boîte de transmission arrière, à laquelle est associé un dispositif de commande collective du pas des pales 13.

Pour ce qui concerne la structure, la configuration et le fonctionnement de la boîte de transmission arrière et du dispositif de commande collective du pas des pales 13, ainsi que du rotor 7, on se reportera avantageusement aux brevets français FR 1 531 536 et américains US-3,594,097 et US-4,626,173, qui sont incorporés dans le présent mémoire descriptif par voie de référence, car ces organes ne font pas partie de l'invention.

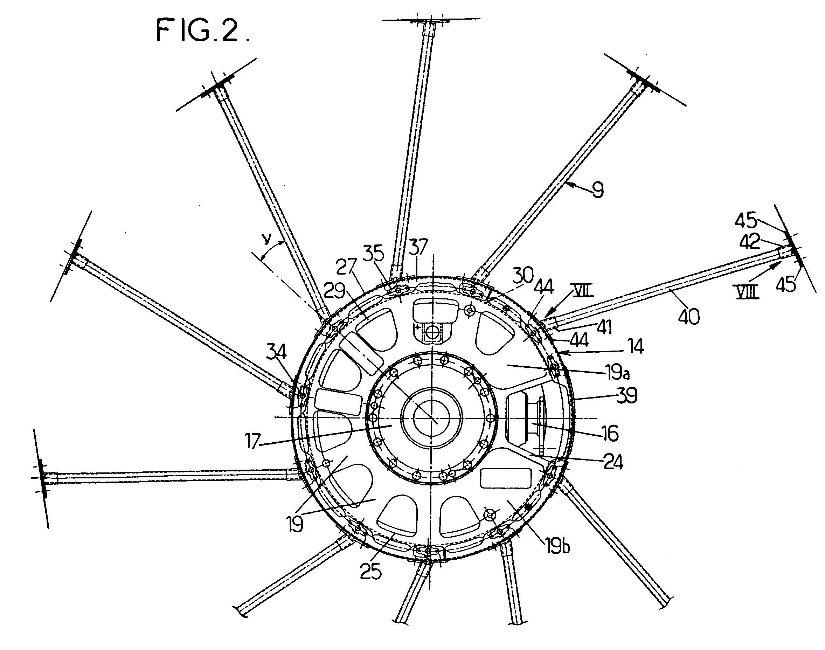

Cependant, la boîte de transmission arrière est globalement enveloppée par un carter, lui-même entouré par un corps 14 central annulaire du redresseur 8. Ce corps annulaire 14, de forme externe cylindrique ou tronconique, est maintenu coaxial à la veine 6 en étant solidaire de la structure de l'empennage 2 par l'intermédiaire des aubes 9 du redresseur 8, qui maintiennent le corps annulaire 14 au centre de la veine 6 et du côté de sa sortie par rapport au rotor 7. Ce dernier est entraîné en rotation par un arbre moteur 15, lui-même entraîné, par l'intermédiaire de la boîte de transmission arrière, à partir d'un arbre de transmission traversant un bras 16 et relié à une sortie annexe de la boîte de transmission principale de l'hélicoptère. Une partie du bras 16 est disposée sensiblement radialement dans la veine 6, à la place sensiblement de l'une des aubes 9 du redresseur 8, dans l'espace délimité entre les deux aubes 9 les plus écartées l'une de l'autre sur les figures 1 et 2. Il est connu que la rotation du rotor 7 dans la veine 6 créé un écoulement d'air guidé dans cette dernière, engendrant une poussée transversale anti-couple, dont la variation de l'amplitude est commandée par le dispositif de commande collective du pas des pales 13, actionné par une bielle de commande, non représentée, car on suppose que le bras 16 de la figure 1 sert de carénage à l'arbre de transmission et à cette bielle.

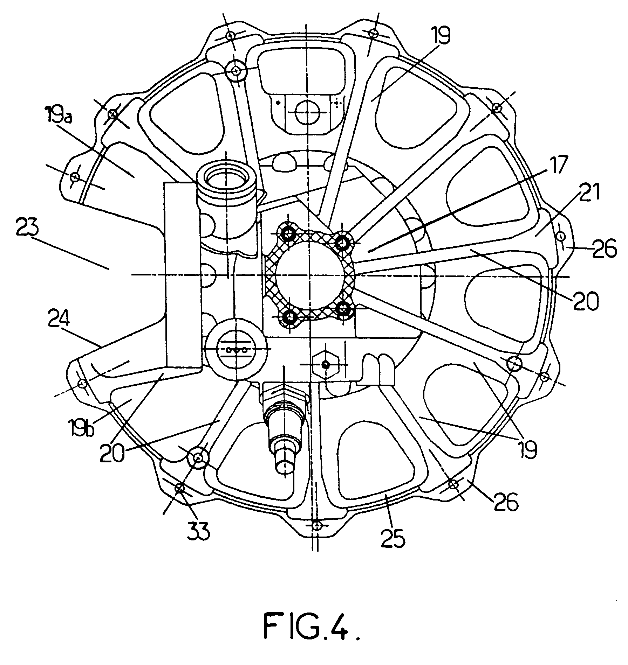

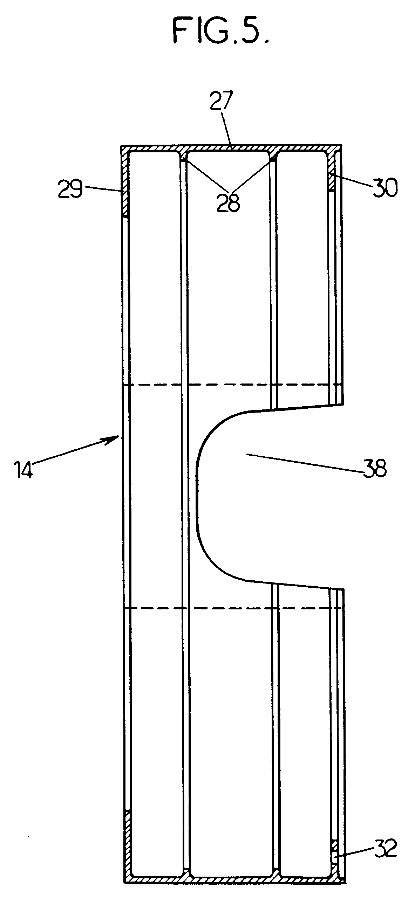

Les aubes 9, fixées dans le divergent 12 de la veine 6, en aval des pales 13 du rotor 7, assurent une récupération de l'énergie de rotation du flux d'air en aval des pales 13, en redressant ce flux vers l'axe X-X de la veine 6, et en procurant un supplément de poussée anti-couple, comme expliqué dans le brevet français FR 2 534 222, dont la description est incorporée dans le présent mémoire descriptif par voie de référence, en particulier pour ce qui concerne la description des figures 4 et 5 de ce brevet. Le redressement du flux d'air par les aubes 9 est notamment assuré par le choix approprié du profil aérodynamique dissymétrique de leur partie courante profilée, et en particulier de sa cambrure et de son calage angulaire par rapport à l'axe X-X de la veine 6.

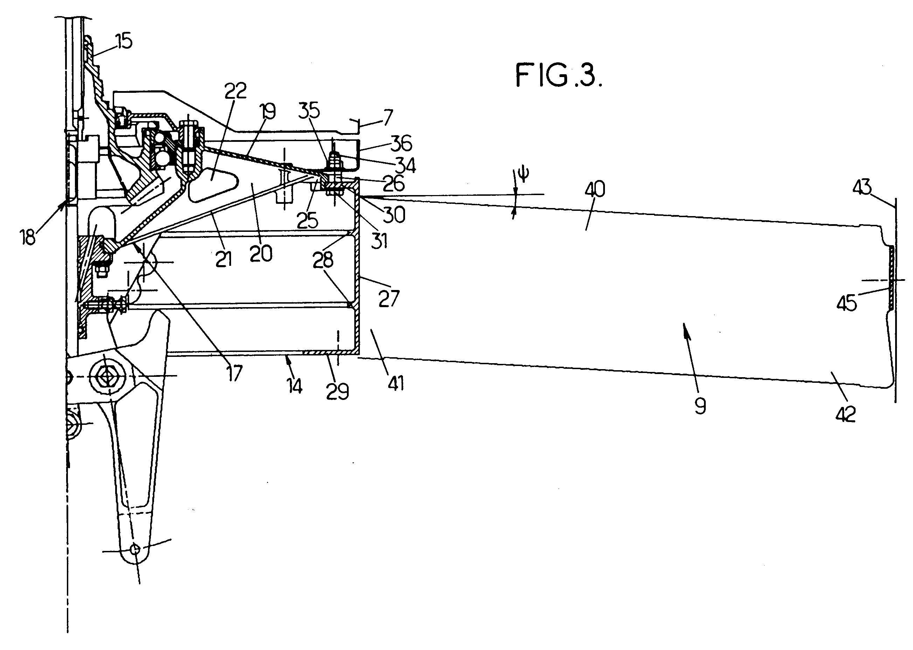

Sur les figures 2, 3 et 4, on voit le carter 17 qui enveloppe un ensemble repéré dans son ensemble en 18 (figure 3) et correspondant à la boîte de transmission arrière et aux composants du dispositif de commande de pas qui la traversent. Ce carter 17 est moulé d'une seule pièce en alliage métallique. Il comprend des bras de rigidification 19 s'étendant sensiblement radialement vers l'extérieur, en nombre égal ou inférieur d'une unité au nombre des aubes 9 du redresseur 8, pour la raison indiquée ci-dessous. Chaque bras 19 est aplati en direction circonférentielle (voir figures 2 et 4) et incliné du carter 17 vers le corps 14 et de l'entrée vers la sortie de la veine 6, comme visible sur les figures 1 et 3. De plus, il est renforcé en aval par une nervure 20 radiale (voir figures 3 et 4), de forme triangulaire, qui s'étend selon l'axe de la veine 6 le long de son côté lié au carter 17, et qui s'amincit jusqu'à son extrémité radiale externe, vers le corps 14, chaque nervure 20 ayant un bord aval 21 plat et élargi, et étant ajourée en 22 dans sa partie centrale. Deux bras voisins 19a et 19b sont à la fois plus larges et plus écartés l'un de l'autre que les autres bras 19, afin de délimiter entre eux un évidement 23 à bord 24 surépaissi vers l'amont, pour le passage du bras de transmission 16, et le bras 19b est élargi au point de constituer un bras double renforcé par deux nervures aval 20 (voir figure 4). Les bras 19, 19a et 19b sont reliés les uns aux autres par une jante 25, sensiblement circulaire et circonférentielle, également aplatie radialement et nervurée vers l'aval, qui entoure le carter 17 sauf entre les bras 19a et 19b, au niveau de l'évidement 23. Chaque bras 19, 19a et 19b est muni, radialement à l'extérieur de la jante 25 et de l'extrémité radiale externe de chaque nervure 20 correspondante, d'une patte 26 de fixation par vissage, qui présente des faces radiales d'appui usinées.

Le corps central tubulaire 14 du redresseur 8 est montré sur les figures 2, 3, 5 et 6. Il est réalisé par usinage d'un bloc d'alliage d'aluminium à partir d'une ébauche matricée. Il présente une paroi latérale 27 à surface externe de révolution axiale et cylindrique, et qui est rigidifiée par deux nervures radiales internes et annulaires 28, axialement espacées dans sa partie centrale, ainsi que par deux bords tombés radiaux internes et annulaires 29 et 30, à ses extrémités axiales, dont le bord aval 29 est plus large que le bord amont 30, constituant une bride de fixation centrée sur les pattes 26 des bras 19 du carter 17. Cette fixation est assurée par un ensemble de vis 31 (figure 3) traversant des perçages 32 (figure 5) répartis sur la périphérie de la bride radiale 30 du corps 14, et les perçages 33 (figure 4) en regard sur les pattes 26 à l'extrémité radiale externe des nervures 20 des bras 19 du carter 17, ces pattes 26 étant appliquées contre la face amont de la bride 30, et les vis 31 sont vissées dans des écrous 34 (figures 2 et 3) autobloquants, montés flottants et amovibles dans des pattes à écrous 35 rivetées sur la face amont du voile radial dentelé 37 d'une cornière annulaire 36 (figure 3), ainsi simultanément fixée contre les pattes 26 et la bride 30, et formant sensiblement un joint d'étanchéité entre le rotor 7 et le corps 14 vis-à-vis du flux d'air en sortie du rotor 7. La grande surface d'appui des pattes à écrous 35 procure une charge de serrage faible et stable dans le temps, et le centrage de la boîte de transmission arrière 18 avec son carter 17 est garanti par le diamètre interne précis de la bride 30 du corps de redresseur 14.

Pour le passage du bras de transmission 16, le corps 14 présente, en regard de l'évidement 23 du carter 17, une ouverture latérale 38 (figure 5) ménagée dans la paroi latérale 27 et dans la bride 30 du corps 14, et à bord 39 surépaissi vers l'extérieur (figure 2).

Chaque aube 9, dont la partie courante à profil aérodynamique 40 s'étend sur la majeure partie de son envergure, est individuellement rapportée sur le redresseur 8 et reliée d'une part à la paroi latérale 27 du corps 14, pratiquement de la bride amont 30 à la nervure aval 29 de ce dernier, par un pied d'aube 41 et, d'autre part, par un bout d'aube 42 à la paroi annulaire 43 de la veine 6.

La liaison du pied d'aube 41 au corps 14 est assurée par une fixation permanente par rivetage de pattes de fixation 44 du pied 41, ces pattes 44 étant transversales, cintrées et inclinées l'une du côté de l'extrados et l'autre du côté de l'intrados de l'aube 9, sur la face latérale 27 et radialement à l'extérieur d'une patte de fixation 26 d'une nervure 20 et d'un bras 19 du carter 17, qui est fixée à la bride 30 du corps 14 par une liaison vissée amovible. Les aubes 9 sont ainsi fixées par leur pied 41 contre la paroi latérale 27 du corps 14 directement au droit des nervures 20 des bras 19 du carter 17, ce qui procure une bonne rigidité. Il y a autant d'aubes 9 que de nervures 20.

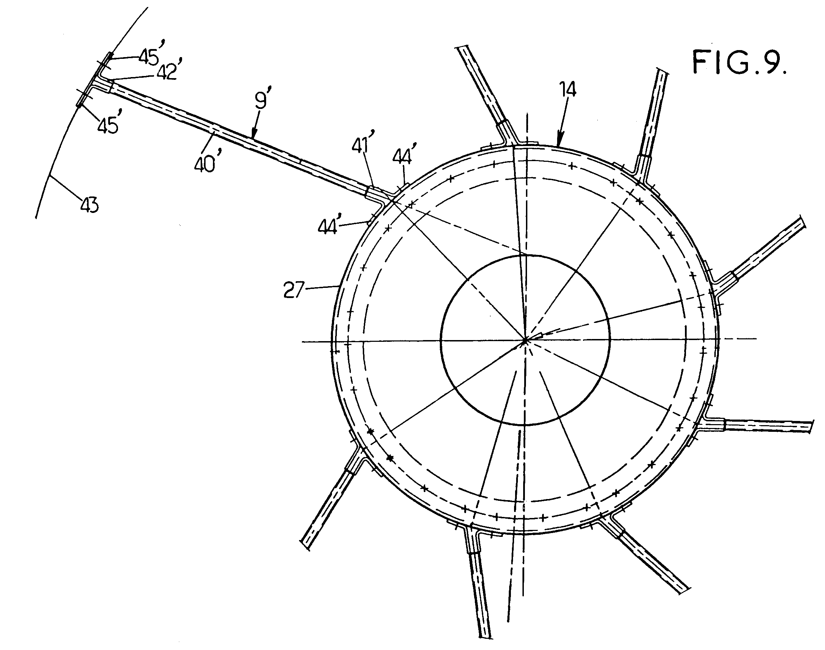

Par contre, le bout d'aube 42, muni également de pattes de fixation 45 transversales, cintrées et inclinées l'une du côté de l'extrados et l'autre du côté de l'intrados de l'aube 9, est fixé à la paroi annulaire 43 par une liaison amovible par vissage de ses pattes 45 dans un insert 46 scellé dans la paroi latérale 43 (voir figures 6 et 8).

Les pattes 44 et 45 des pieds 41 et bouts 42 d'aubes 9 sont cintrées pour correspondre à la courbure de la surface contre laquelle elles sont fixées, et également inclinés transversalement et d'amont en aval par rapport à la partie profilée 40 des aubes 9 de sorte que chaque aube 9 soit d'une part inclinée, par rapport à la direction radiale, du corps de redresseur 14 vers la paroi 43 de la veine 6 et dans le sens contraire au sens de rotation du rotor 7, d'un angle ν pouvant atteindre 24° au niveau du pied d'aube 41, de façon à transmettre le couple repris par la boîte de transmission arrière en réaction à la rotation du rotor 7, en compression dans les aubes 9 plutôt qu'en flexion, et simultanément pour réduire le bruit d'interaction du sillage des pales 13 avec les aubes 9. D'autre part, chaque aube 9 est simultanément inclinée en flèche du corps de redresseur 14 vers la paroi annulaire 43 et de l'amont vers l'aval dans la veine 6 d'un angle Ψ, de l'ordre de 4°, ce qui permet de diminuer le bruit d'interaction du sillage des pales 13 avec les aubes 9 en écartant le bord d'attaque des aubes 9 du bord de fuite des pales 13 à la périphérie de la veine 6, et, simultanément, pour garantir un bon positionnement du rotor 7 dans la veine 6 en fixant le corps de redresseur 14 et la boîte de transmission arrière qu'il enveloppe à une faible distance en arrière ou aval du plan de rotation P du rotor 7.

A titre d'exemple, chaque aube 9 peut présenter un profil aérodynamique de type NACA 65 A 10, avec une corde de 80 mm et un calage à piquer de 2,5° autour de son axe, pour bien redresser le flux d'air en sortie du rotor 7.

Les fonctions ainsi assurées par le redresseur 8 sont essentiellement qu'il maintient la boîte de transmission arrière 18 et le rotor 7 de façon à supporter les charges provenant du couple de la boîte de transmission arrière 18 et du bras de transmission 16, du couple et de la charge de commande en lacet, par variation du pas, de la poussée du rotor 7, du poids de l'ensemble rotor 7, redresseur 8 et boîte de transmission arrière 18 avec son carter 17, et des charges thermiques entre les matériaux. Les contraintes induites par la reprise vissée de la boîte de transmission arrière 18 et son carter 17 sur le corps annulaire 14 du redresseur 8 sont faibles, du fait que le nombre des bras radiaux 19 et des nervures 20 est sensiblement aussi grand que celui des aubes 9, ce qui procure une grande marge de sécurité.

Pour réduire la masse du redresseur 8, les aubes 9 sont creuses, et peuvent être métalliques (en alliage d'aluminium par exemple) ou en matériaux composites. Dans ce dernier cas, chaque aube composite 9 peut comporter un noyau de mousse, autour duquel la pale est réalisée par exemple par mise en forme de nappes ou plis de tissus de fibres de renfort, par exemple de carbone et/ou de verre, préimprégnés d'une résine synthétique de rigidification, par exemple une résine époxyde.

Mais il est aussi possible que chaque aube 9 composite soit moulée par transfert d'une résine époxyde sur des nappes ou plis de tissus de fibres de renfort mis en place en une préforme. Chaque aube composite 9 peut également être une aube injectée ayant une armature constituée de fibres courtes de renfort, par exemple en verre ou en carbone, noyées dans une matrice d'une résine synthétique, par exemple respectivement de vinylester ou de polyéther-éther-cétone, appelée résine PEEK.

Les pattes de fixation 44 et 45 du pied 41 et du bout 42 des aubes 9 peuvent être d'une seule pièce avec la partie profilée 40 de ces aubes. La figure 7 représente la vue selon la flèche VII de la figure 2 d'un pied d'aube 41 avec ses deux pattes transversales 44 fixées chacune par quatre rivets 47 sur le corps 14 et de part et d'autre du profil de la partie courante 40.

Les figures 6 et 8 représentent la fixation amovible du bout d'aube 42 sur un insert 46 et selon la flèche VIII de la figure 2. L'insert 46 est un corps sensiblement cylindrique, présentant des nervures périphériques en saillie vers l'extérieur, pour assurer l'ancrage dans la paroi 43, et ce corps a un fond formant une face de fixation plane 49 affleurant sensiblement dans la face latérale interne de la paroi annulaire 43. Les deux pattes 45 du pied d'aube 42 sont fixées chacune par l'une de deux vis 48 sur la face de fixation 49, avec interposition entre chaque patte 45 et la face 49 d'une cale 50 amovible, par exemple pelable, pour le réglage du jeu de montage du redresseur 8 dans le divergent 12 de la veine 6.

L'insert 46 peut être un corps moulé en alliage d'aluminium et à face de fixation plane 49 usinée, ou une pièce moulée en une matière plastique injectée, et armée de fibres courtes de renfort, minérales ou organiques, par exemple de verre ou de carbone.

La figure 9 représente une variante de redresseur qui ne se distingue essentiellement de celui des figures précédentes que par le mode de liaison de chaque aube 9' d'une part au corps de redresseur 14 et d'autre part à la paroi annulaire 43 de la veine 6. Dans cette variante, les pattes 44' fixées, par exemple par des rivets, à la paroi latérale 27 du corps annulaire 14 ne sont pas d'une seule pièce avec la partie profilée 40' de l'aube 9', mais sont des pattes solidaires d'un embout de pied de pale 41' rapporté sur l'extrémité correspondante de la partie profilée 40', les pattes 45' vissées dans la paroi annulaire 43, par l'intermédiaire d'un insert (non représenté) noyé dans cette paroi, étant de même des pattes solidaires d'un embout 42' de bout de pale rapporté sur l'extrémité correspondante de la partie profilée 40'. Dans cet exemple, chacun des embouts 41' et 42' est un embout à manchon, dans lequel l'extrémité correspondante de la partie courante profilée 40' de l'aube 9' est emmanchée, les pattes 44' et 45' étant par exemple d'une seule pièce en tôle avec le manchon correspondant 41' ou 42'.

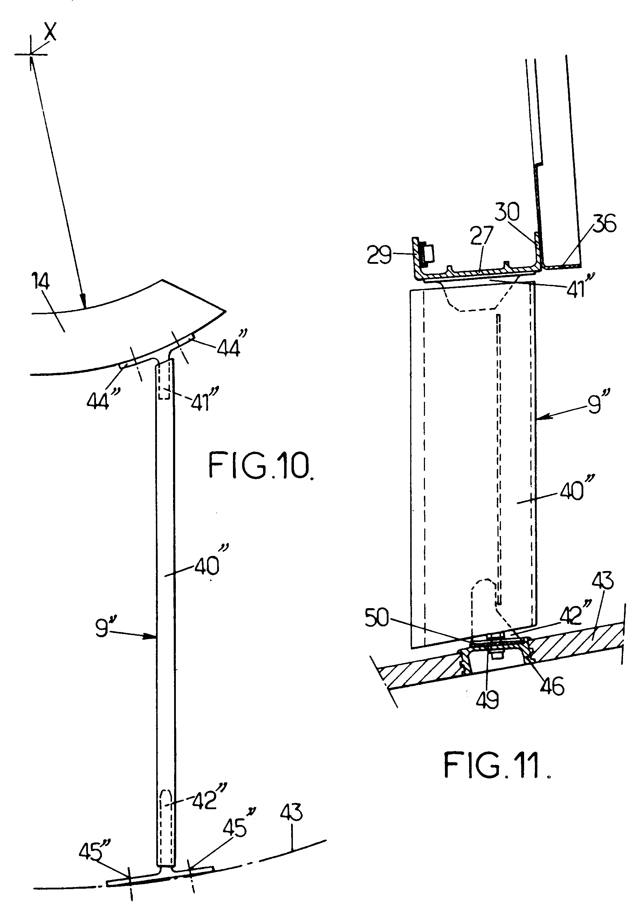

Les figures 10 et 11 représentent, en se limitant à une seule aube 9'', une autre variante de redresseur dans laquelle les pattes de fixation 44'' et 45'' respectivement rivées ou vissées au corps 14 et vissées à la paroi annulaire 43 sont solidaires d'embouts rapportés sur les extrémités correspondantes de la partie profilée 40'' de l'aube 9'', mais, dans cette variante, ces embouts de pied 41'' et de bout d'aube 42'' sont des embouts emmanchés chacun dans l'extrémité creuse correspondante de la partie profilée 40''. Les embouts emmanchés 41'' et 42'' peuvent être retenus dans l'extrémité creuse correspondante de l'aube 9'' par collage, soudage ou tout autre moyen. Bien entendu, les pattes 45'' de l'embout de bout d'aube 42'' peuvent être retenues sur la paroi annulaire 43 de la veine 6 à l'aide d'un insert 46, comme dans l'exemple précédent (voir figures 6 et 8).

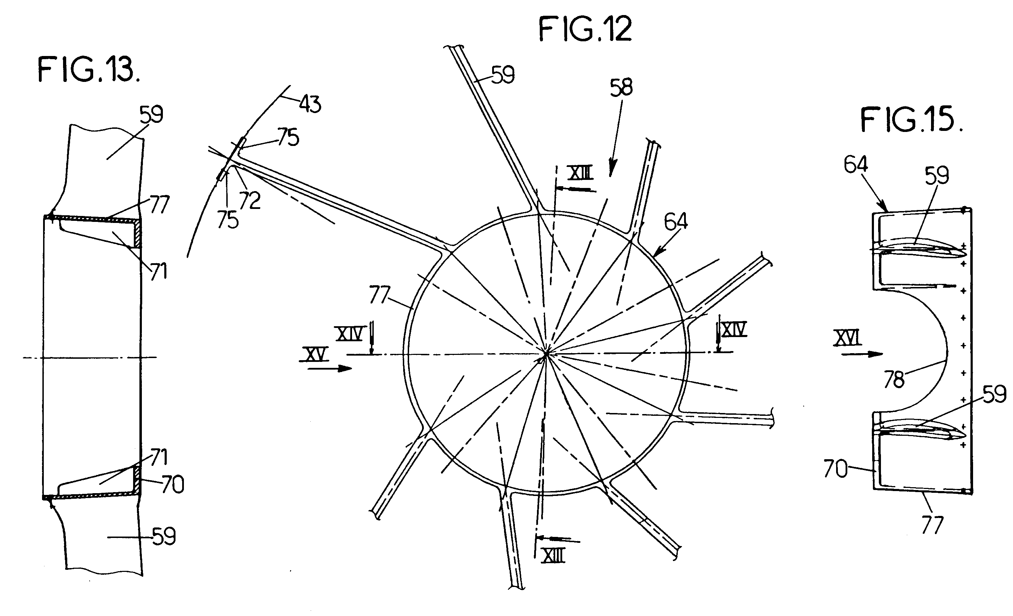

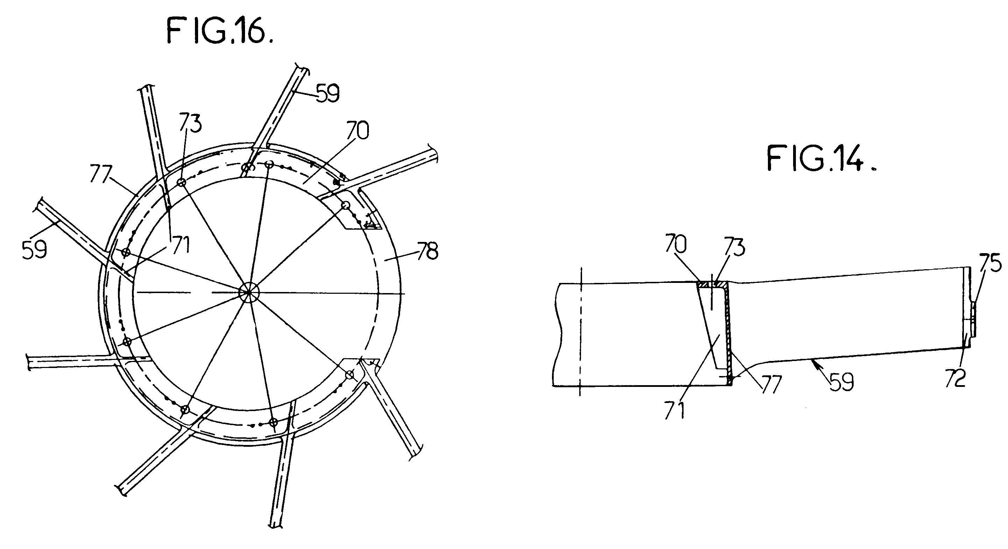

Les figures 12 à 16 représentent schématiquement une variante de redresseur monobloc, repérée dans son ensemble en 58, et dont les aubes 59 et le corps central tubulaire 64 sont d'une seule pièce en matériau composite. Il n'y a donc pas de patte de fixation au pied d'aube, mais le bout 72 de chaque aube 59 présente toujours deux pattes de fixation transversales 75 fixées de manière amovible, comme dans les exemples précédents, à la paroi annulaire 43 de la veine 6. Mais, pour assurer la rigidité nécessaire au niveau des pieds d'aubes, chaque aube 59 se prolonge à l'intérieur du corps central 64 par une nervure 71 qui s'étend de la bride annulaire radiale interne 70 du corps 64, à son extrémité amont, jusqu'à proximité de son extrémité aval. Comme dans l'exemple précédent, la bride amont 70 présente des perçages 73 de liaison par vissage aux pattes de fixation des extrémités des bras et des nervures radiales du carter de la boîte de transmission arrière, et ces perçages 73 de fixation par vissage sont également sensiblement radialement à l'intérieur du pied de chaque aube 59. Egalement, une ouverture latérale 78, pour le passage du bras de transmission 16, est ménagée dans la paroi latérale 77 de forme légèrement tronconique, du corps annulaire 64 ainsi que dans la bride de fixation 70.

En variante, cette bride 70 peut être portée par le corps annulaire 64 à son extrémité axiale aval, et, que la bride 70 soit à l'extrémité amont ou aval de la paroi latérale 77 du corps 64, une autre bride ou nervure, par exemple en cornière emboutie en acier inoxydable, (non représentée) peut être collée et rivetée dans l'autre extrémité axiale du corps annulaire 64, pour en accroître la rigidité.

Le redresseur monobloc composite 58 peut être un composant moulé par compression en un composite de masse volumique comprise entre 1800 et 1900 kg/m3 par exemple, et constitué de fibres courtes de verre ou de carbone, d'une longueur de l'ordre de 2,54 cm, représentant environ 67 % en poids et environ 47 % en volume du matériau composite, et noyées dans une résine de vinylester ou de PEEK, le moulage par compression s'effectuant à une pression de l'ordre de 2,3 à 10 MPa et à une température de moulage de l'ordre de 130 à 150° C, lorsqu'on utilise la matière composite de dénomination commerciale FIBERITE (référence VE 49 595) de la société britannique ICI, et constituée de fibres de verre et de résine de vinylester.

Pour assurer une bonne reprise des efforts qui lui sont transmis par les aubes, tout en étant d'une grande légèreté, la paroi annulaire 43 de la veine 6, d'une seule pièce formant le convergent 10, la partie cylindrique 11 et le divergent 12, est un sandwich composite présentant, comme représenté schématiquement sur la figure 6, également deux rebords annulaires périphériques 51 et 52, par chacun desquels la paroi 43 est raccordée à l'intérieur de l'un respectivement des deux revêtements latéraux composites 53 des flancs de la carène 5. Entre ses rebords 51 et 52, la paroi annulaire 43 est constituée d'un revêtement intérieur 54 (vers l'axe X-X de la veine 6), d'un revêtement extérieur 55 et d'une couche de nid d'abeilles 56 s'étendant entre les deux revêtements 54 et 55 pour les stabiliser, surtout le revêtement interne 54 qui est travaillant. Cette couche 56 de nid d'abeilles, par exemple en Nomex (marque déposée) et phénol, présente une épaisseur sensiblement constante dans le convergent 10 et la partie cylindrique 11 de la paroi 43, mais une épaisseur plus grande dans le divergent 12, sauf dans sa sortie arrondie, pour assurer un bon ancrage des inserts 46 dans la couche de nid d'abeilles. Chacun des revêtements 54, 55 et 53 est un revêtement stratifié, d'épaisseur sensiblement constante, et comprend un empilage de plusieurs couches de tissus de fibres de renfort, par exemple de verre, carbone ou aramide, dont des tissus hybrides de fibres de verre et carbone, et d'une résine synthétique de rigidification, l'épaisseur du revêtement interne 54 étant supérieure à celle du revêtement externe 55, elle-même supérieure à l'épaisseur des revêtements latéraux 53, lesquels sont pour former les flancs de carène 5, intérieurement renforcés par une couche de nid d'abeilles 57 au-delà de la zone de superposition des revêtements latéraux 53 et des rebords annulaires 51 et 52, formés chacun par les prolongements de certaines au moins des couches des revêtements interne et externe 54 et 55. Le revêtement externe comprend également un film d'étanchéité par exemple en matière intumescente.

Les dispositifs anti-couple décrits ci-dessus sont équipés d'un redresseur facilement interchangeable, duquel l'ensemble constitué par le rotor 7 et la boîte de transmission arrière 18 dans son carter 17 peut être facilement déposé par le dévissage des vis de liaison au bout des bras du carter. De même, le remontage de l'ensemble rotor et boîte de transmission arrière est facilité, de sorte que les opérations de maintenance sur le dispositif anti-couple sont plus rapides et plus économiques. Ces avantages viennent s'ajouter à la grande rigidité de l'ensemble obtenue par l'amélioration de la liaison mécanique entre la carène 5, le redresseur 8 et le carter 17 supportant la boîte de transmission arrière et le rotor 7. Le jeu entre le bout des pales 13 du rotor 7 et la paroi annulaire 43 de la veine 6 peut être réduit, ce qui améliore le rendement aérodynamique et les performances acoustiques du dispositif. De plus, la liaison mécanique et les performances acoustiques sont encore améliorées par les différentes inclinaisons donnés aux aubes dans la veine.

## Revendications

1. Dispositif anti-couple caréné, pour aéronef à voilure tournante, tel qu'un hélicoptère, comprenant :
- une veine (6) sensiblement de révolution d'axe (X-X) sensiblement transversal à l'axe longitudinal de l'aéronef, et traversant une carène (5) dans la partie arrière de l'aéronef,
- un rotor (7) multipale, monté sensiblement coaxial dans la veine (6) et entraîné par un mécanisme d'entraînement en rotation (18) fixé sensiblement coaxialement dans la veine (6), de sorte que la rotation du rotor (7) engendre un flux d'air dans la veine (6), et
- un stator redresseur (8), fixé dans la veine (6) en aval du rotor (7), par rapport au sens du flux d'air, et comportant un corps central annulaire (14), entourant le mécanisme d'entraînement en rotation (18), ainsi que des aubes (9) fixes présentant chacune, entre un pied d'aube (41) et un bout d'aube (42), une partie courante (40) à profil aérodynamique redressant le flux d'air en aval du rotor (7) vers l'axe (X-X) de la veine (6), et s'étendant entre le corps central annulaire (14) et une paroi annulaire (43) de la veine (6), auxquels elles sont liées chacune respectivement par son pied (41) et par son bout (42) d'aube, de façon à supporter le mécanisme d'entraînement en rotation (18) et le rotor (7) dans la veine (6), caractérisé en ce que ledit mécanisme d'entraînement en rotation (18) est enveloppé dans un carter (17) muni de bras de rigidification (19) sensiblement radiaux, reliés les uns aux autres par une jante (25) s'étendant en direction circonférentielle autour d'au moins une partie du carter (17), les bras de rigidification (19) portant, à leur extrémité radiale externe, des moyens (26) de fixation amovible coopérant avec des moyens de fixation complémentaires (31, 32, 34) ménagés sur une bride (30) radiale interne de fixation et de centrage du corps (14) central annulaire du redresseur (8), de façon à fixer rigidement le redresseur (8) et le carter (17) l'un à l'autre et tous deux dans la veine (6).

2. Dispositif anti-couple selon la revendication 1, caractérisé en ce que le redresseur (8) comporte au moins autant d'aubes (9) que le carter (17) comporte de bras de rigidification (19), et chaque bras (19) est fixé au corps de redresseur (14) sensiblement radialement à l'intérieur d'au moins un pied d'aube (41) reliant l'aube (9) correspondante audit corps de redresseur (14).

3. Dispositif anti-couple selon l'une des revendications 1 et 2, caractérisé en ce que les bras de rigidification (19) sont aplatis en direction circonférentielle, inclinés du carter (17) vers le corps de redresseur (14) et de l'amont vers l'aval de la veine (6), et chacun renforcé par l'une au moins de nervures (20) sensiblement radiales, de forme sensiblement triangulaire s'étendant vers l'aval dans la veine (6) du côté du carter (17) et s'amincissant vers le corps de redresseur (14), et en nombre sensiblement égal aux aubes (9) du redresseur.

4. Dispositif selon l'une quelconque des revendications 1 à 3, caractérisé en ce que le carter (17) est moulé d'une seule pièce avec les bras de rigidification (19), la jante (25), les nervures (20) de renfort et les moyens de fixation amovible (26), comportant, pour chaque bras (19), au moins une patte radiale de fixation par vissage (31, 34) à la bride de fixation et centrage (30) du corps de redresseur (14), la patte de fixation (26) étant radialement en saillie à l'extérieur de la jante (25).

5. Dispositif selon l'une quelconque des revendications 1 à 4, caractérisé en ce que le carter (17) présente deux bras de rigidification voisins (19a, 19b), en direction circonférentielle, qui sont plus larges et plus écartés l'un de l'autre que les autres bras (19), et non reliés l'un à l'autre par la jante (25), et qui délimitent entre eux un évidement (23) pour le passage d'un bras de transmission (16) s'accouplant au mécanisme d'entraînement en rotation (18) en traversant également une ouverture latérale (38) ménagée dans le corps central annulaire (14) et en regard de l'évidement (23) du carter (17).

6. Dispositif selon l'une quelconque des revendications 1 à 5, caractérisé en ce que le corps annulaire de redresseur (14), à surface externe de révolution axiale, et de forme cylindrique et/ou tronconique, contre laquelle sont fixés les pieds d'aube (41), présente la bride (30) de fixation et centrage du carter (17) à l'une de ses extrémités amont et aval, et une seconde bride de rigidification radiale interne et annulaire (29) à son autre extrémité.

7. Dispositif selon l'une quelconque des revendications 1 à 6, caractérisé en ce qu'une cornière (36) formant joint entre le rotor (7) et le corps de redresseur (14), est retenue sur la bride (30) de centrage et fixation dudit corps de redresseur (14) par les moyens de fixation (31, 34) solidarisant les bras (19) du carter (17) contre la face amont de ladite bride (30) du corps (14).

8. Dispositif selon l'une quelconque des revendications 1 à 7, caractérisé en ce que les aubes (9) sont creuses et individuellement rapportées sur le corps de redresseur (14) et de manière amovible à la paroi latérale (43) de la veine (6), à l'aide de pattes de fixation (44, 45) respectivement de leur pied (41) et de leur bout d'aube (42).

9. Dispositif selon la revendication 8, caractérisé en ce que la ou les pattes de fixation (44, 45) du pied (41) et/ou du bout d'aube (42) sont d'une seule pièce avec la partie profilée (40) de l'aube (9).

10. Dispositif selon la revendication 8, caractérisé en ce que la ou les pattes de fixation (44', 44'', 45', 45'') du pied (41', 41'') et/ou du bout d'aube (42', 42'') sont solidaires d'un embout rapporté sur l'extrémité correspondante de la partie profilée (40', 40'') de l'aube (9', 9'').

11. Dispositif selon la revendication 10, caractérisé en ce qu'au moins un embout (41'', 42'') rapporté sur une aube (9'') est un embout emmanché dans l'extrémité creuse correspondante de l'aube (9'').

12. Dispositif selon la revendication 10, caractérisé en ce qu'au moins un embout (41', 42') rapporté sur une aube (9') est un embout à manchon dans lequel l'extrémité correspondante de l'aube (9') est emmanchée.

13. Dispositif selon l'une quelconque des revendications 8 à 12, caractérisé en ce que les aubes (9, 9', 9'') sont en composite.

14. Dispositif selon la revendication 13, caractérisé en ce que chaque aube composite (9, 9', 9'') comporte un noyau de mousse.

15. Dispositif selon l'une quelconque des revendications 13 et 14, caractérisé en ce que chaque aube (9, 9', 9'') composite est une aube injectée avec une armature constituée de fibres courtes de renfort, noyées dans une matrice de résine synthétique de rigidification.

16. Dispositif selon l'une des revendications 13 et 14, caractérisé en ce que chaque aube (9, 9', 9'') composite est une aube moulée par transfert d'une résine époxyde sur des tissus de fibres.

17. Dispositif selon l'une des revendications 13 et 14, caractérisé en ce que chaque aube (9, 9', 9'') composite est réalisée par mise en forme de tissus de fibres préimprégnés d'une résine synthétique de rigidification.

18. Dispositif selon l'une quelconque des revendications 1 à 7, caractérisé en ce que les aubes (59) et le corps de redresseur (64) sont d'une seule pièce en matériau composite.

19. Dispositif selon la revendication 18, caractérisé en ce que le redresseur composite (58) est une pièce monobloc moulée par compression et comprenant une armature de fibres courtes de renfort, noyées dans une matrice synthétique de rigidification.

20. Dispositif selon l'une quelconque des revendications 18 et 19, caractérisé en ce que chaque aube (59) du redresseur composite (58) se prolonge, à l'intérieur du corps central annulaire (64), par une nervure (71) s'étendant axialement de la bride de fixation et centrage (70) sensiblement à l'une des extrémités axiales dudit corps (64) jusqu'à sensiblement l'autre extrémité axiale dudit corps central annulaire (64).

21. Dispositif selon l'une quelconque des revendications 1 à 20, caractérisé en ce que les aubes (9, 9', 9'', 59) sont inclinées du corps de redresseur (14, 64) vers la paroi (43) de la veine (6), par rapport à la direction radiale, dans le sens contraire au sens de rotation du rotor (7), et/ou en flèche de l'amont vers l'aval de la veine (6).

22. Dispositif selon l'une quelconque des revendications 1 à 21, caractérisé en ce que chaque aube (9) est reliée à la paroi latérale (43) de la veine (6) par fixation de son bout (42) d'aube sur un insert (46) scellé dans la paroi (43) de la veine (6).

23. Dispositif selon la revendication 22, caractérisé en ce que l'insert (46) est une pièce moulée en matière plastique injectée, armée de fibres courtes de renfort, et présentant une face de fixation plane (49) affleurant sensiblement dans la face interne de la paroi (43) de la veine (6), ainsi qu'un corps cylindrique avec des nervures périphériques externes d'ancrage dans ladite paroi (43).

24. Dispositif selon l'une quelconque des revendications 1 à 23, caractérisé en ce que la paroi latérale (43) de la veine (6) est d'une seule pièce en sandwich composite formant, entre deux rebords (51, 52) annulaires périphériques de raccordement à deux revêtements (53) latéraux composites de carène (5), et en succession de l'amont vers l'aval, un convergent d'entrée (10), une partie cylindrique (11) et un divergent (12) auquel sont fixées les aubes (9), et qui comprend un revêtement interne (54) et un revêtement externe (55) entre lesquels s'étend une couche de nid d'abeilles (56), dont l'épaisseur est supérieure dans le divergent (12) à ce qu'elle est dans le convergent (10) et la partie cylindrique (11), chacun des revêtements interne et externe (54, 55), des rebords (51, 52) et des revêtements latéraux (53) étant un stratifié d'au moins deux nappes superposées de tissus de fibres rigidifiés par une résine synthétique d'imprégnation, le revêtement interne (54) étant d'une épaisseur supérieure à celle du revêtement externe (55), lui-même d'une épaisseur supérieure à celle des revêtements latéraux (53).

## Claims

1. Ducted counter-torque device for a rotary-wing aircraft, such as a helicopter, comprising:
- a substantially axisymmetric duct (6) of axis (X-X) substantially transverse to the longitudinal axis of the aircraft, and passing through a fairing (5) in the rear part of the aircraft,
- a multi-blade rotor (7) mounted substantially coaxially in the duct (6) and driven by a rotational-drive mechanism (18) fixed substantially coaxially in the duct (6), so that the rotation of the rotor (7) generates an airflow in the duct (6), and
- a flow-straightening stator (8), fixed in the duct (6) downstream of the rotor (7), with respect to the direction of the airflow, and including an annular central body (14) surrounding the rotational-drive mechanism (18), as well as stationary vanes (9) each exhibiting, between a vane root (41) and a vane tip (42), a main vane section (40) with aerodynamic profile straightening out the airflow downstream of the rotor (7) towards the axis (X-X) of the duct (6), and extending between the annular central body (14) and an annular wall (43) of the duct (6), to which body and wall they are each linked respectively by their vane root (41) and by their vane tip (42),so as to support the rotational-drive mechanism (18) and the rotor (7) within the duct (6), characterized in that the said rotational-drive mechanism (18) is encased in a casing (17) equipped with substantially radial rigidifying arms (19) connected to one another by a rim (25) extending in a circumferential direction around at least a part of the casing (17), the rigidifying arms (19) bearing, at their external radial end, removable fastening means (26) interacting with complementary fastening means (31, 32, 34) formed on an internal radial flange (30) for fastening and centring of the annular central body (14) of the flow-straightener (8), so as rigidly to fasten the flow-straightener (8) and the casing (17) to one another, and both into the duct (6).

2. Counter-torque device according to Claim 1, characterized in that the flow-straightener (8) includes at least as many vanes (9) as the casing (17) includes rigidifying arms (19), and each arm (19) is fastened to the flow-straightener body (14) substantially radially inside at least one vane root (41) connecting the corresponding vane (9) to the said flow-straightener body (14).

3. Counter-torque device according to one of Claims 1 and 2, characterized in that the rigidifying arms (19) are flattened in a circumferential direction, inclined from the casing (17) towards the flow-straightener body (14) and from the upstream end to the downstream end of the duct (6), and each reinforced by at least one of substantially radial ribs (20) of substantially triangular shape extending downstream in the duct (6) from the side of the casing (17), and thinning towards the flow-straightener body (14), and substantially equal in number to the vanes (9) of the flow-straightener.

4. Device according to any one of Claims 1 to 3, characterized in that the casing (17) is moulded as a single piece with the rigidifying arms (19), the rim (25), the reinforcing ribs (20), and the removable fastening means (26) including, for each arm (19), at least one radial tab for screw-fastening (31, 34) to the fastening and centring flange (30) of the flow-straightener body (14), the fastening tab (26) projecting radially outside the rim (25).

5. Device according to any one of Claims 1 to 4, characterized in that the casing (17) exhibits two neighbouring rigidifying arms (19a, 19b) in the circumferential direction, which are wider and further separated from one another than the other arms (19) and are not connected to one another by the rim (25), and which between them delimit a cutout (23) for the passage of a transmission arm (16) which couples up to the rotational-drive mechanism (18), also passing through a lateral opening (38) formed in the annular central body (14) and opposite the cutout (23) in the casing (17).

6. Device according to any one of Claims 1 to 5, characterized in that the annular flow-straightener body (14), with axially axisymmetric external surface, and cylindrical and/or frustoconical shape, against which the vane roots (41) are fastened, exhibits the flange (30) for fastening and centring of the casing (17) at one of its upstream and downstream ends, and a second, internal and annular radial rigidifying flange (29) at its other end.

7. Device according to any one of Claims 1 to 6, characterized in that an angle bracket (36) forming a joint between the rotor (7) and the flow-straightener body (14) is held onto the flange (30) for centring and fastening said flow-straightener body (14) by the fastening means (31, 34) securing the arms (19) of the casing (17) against the upstream face of the said flange (30) of the body (14).

8. Device according to any one of Claims 1 to 7, characterized in that the vanes (9) are hollow and individually attached to the flow-straightener body (14) and removably attached to the lateral wall (43) of the duct (6), with the aid of tabs (44, 45) respectively for fastening their vane root (41), and their vane tip (42).

9. Device according to Claim 8, characterized in that the tab or tabs (44, 45) for fastening the vane root (41) and/or vane tip (42) are of a single piece with the profiled part (40) of the vane (9).

10. Device according to Claim 8, characterized in that the tab or tabs (44', 44'', 45', 45'') for fastening the vane root (41', 41'') and/or the vane tip (42', 42'') are secured to an end fitting attached to the corresponding end of the profiled part (40', 40'') of the vane (9', 9'').

11. Device according to Claim 10, characterized in that at least one end fitting (41'', 42'') attached to a vane (9'') is an end fitting tightly fitted into the corresponding hollow end of the vane (9'').

12. Device according to Claim 10, characterized in that at least one end fitting (41', 42') attached to a vane (9') is an end fitting with a cuff into which the corresponding end of the vane (9') is tightly fitted.

13. Device according to any one of Claims 8 to 12, characterized in that the vanes (9, 9', 9'') are made of composite.

14. Device according to Claim 13, characterized in that each composite vane (9, 9', 9'') includes a foam core.

15. Device according to any one of Claims 13 and 14, characterized in that each composite vane (9, 9', 9'') is an injected vane with a reinforcement made up of short reinforcing fibres, embedded in a matrix of synthetic rigidifying resin.

16. Device according to one of Claims 13 and 14, characterized in that each composite vane (9, 9', 9'') is a vane which is moulded by transferring an epoxy resin onto fibrous fabrics.

17. Device according to one of Claims 13 and 14, characterized in that each composite vane (9, 9', 9'') is produced by shaping fibrous fabrics preimpregnated with a synthetic rigidifying resin.

18. Device according to any one of Claims 1 to 7, characterized in that the vanes (59) and the flow-straightener body (64) are of a single piece made of composite material.

19. Device according to Claim 18, characterized in that the composite flow-straightener (58) is a monobloc compression-moulded component comprising a reinforcement of short reinforcing fibres embedded in a synthetic rigidifying matrix.

20. Device according to any one of Claims 18 and 19, characterized in that each vane (59) of the composite flow-straightener (58) is extended, inside the annular central body (64), by a rib (71) extending axially from the fastening and centring flange (70) substantially at one of the axial ends of the said body (64) up to substantially the other axial end of the said annular central body (64).

21. Device according to any one of Claims 1 to 20, characterized in that the vanes (9, 9', 9'', 59) are inclined from the flow-straightener body (14, 64) towards the wall (43) of the duct (6), with respect to the radial direction, in the opposite direction to the direction of rotation of the rotor (7), and/or at a slant from the upstream end towards the downstream end of the duct (6).

22. Device according to any one of Claims 1 to 21, characterized in that each vane (9) is connected to the lateral wall (43) of the duct (6) by fastening its vane tip (42) to an insert (46) sealed into the wall (43) of the duct (6).

23. Device according to Claim 22, characterized in that the insert (46) is an injection-moulded plastic component, reinforced with short reinforcing fibres, and exhibiting a flat fastening face (49) fitting substantially flush into the internal face of the wall (43) of the duct (6), as well as a cylindrical body with external peripheral ribs for anchoring into the said wall (43).

24. Device according to any one of Claims 1 to 23, characterized in that the lateral wall (43) of the duct (6) is of a single piece made of composite sandwich forming, between two peripheral annular rims (51, 52) for coupling to two composite lateral skins (53) for the fairing (5), and in succession from upstream to downstream, a convergent inlet nozzle (10), a cylindrical part (11), and a divergent nozzle (12) to which the vanes (9) are fastened, and which comprises an internal skin (54) and an external skin (55) between which there extends a layer of honeycomb structure (56), the thickness of which is greater in the divergent nozzle (12) than it is in the convergent nozzle (10) and the cylindrical part (11), each of the internal and external skins (54, 55), of the rims (51, 52) and of the lateral skins (53) being of laminated structure of at least two superimposed webs of fibrous fabric stiffened by a synthetic impregnation resin, the internal skin (54) being of a greater thickness than that of the external skin (55), itself having a greater thickness than that of the lateral skins (53).

## Patentansprüche

1. Stromlinienförmige Gegendrehmomentvorrichtung für ein Drehflügler-Luftfahrzeug wie z.B. einen Hubschrauber, umfassend:
- einen um eine zur Längsachse des Luftfahrzeugs im wesentlichen quer verlaufende und einen Tragkörper (5) im Heckteil des Luftfahrzeugs durchquerende Achse (X-X) drehsymmetrischen Kanal (6),
- einen Mehrblatt-Rotor (7), der im Kanal (6) im wesentlichen koaxial angebracht ist und durch einen im wesentlichen koaxial im Kanal (6) befestigten Drehantriebsmechanismus (18) angetrieben wird, so daß die Drehung des Rotors (7) eine Luftströmung im Kanal (6) erzeugt, und
- einen Leiteinrichtungs-Stator (8), der im Kanal (6) in bezug auf die Luftströmungsrichtung strömungsabwärts vom Rotor (7) befestigt ist und der einen den Drehantriebsmechanismus (18) umfassenden ringförmigen Mittelkörper (14) sowie feststehende Schaufeln (9) enthält, die jeweils zwischen einem Schaufelfuß (41) und einem Schaufelende (42) einen Strömungsteil (40) mit aerodynamischem Profil aufweisen, der die Luftströmung strömungsabwärts vom Rotor (7) zur Achse (X-X) des Kanals (6) hin leitet, und sich zwischen dem ringförmigen Mittelkorper (14) und einer ringförmigen Wand (43) des Kanals (6) erstrecken, mit denen sie jeweils über ihren Schaufelfuß (41) und über ihr Schaufelende (42) verbunden sind, so daß sie den Drehantriebsmechanismus (18) und den Rotor (7) im Kanal (6) tragen, **dadurch gekennzeichnet**, daß der genannte Drehantriebsmechanismus (18) in einem Gehäuse (17) untergebracht ist, das mit im wesentlichen radialen Versteifungsarmen (19) versehen ist, die miteinander durch eine Felge (25) verbunden sind, die sich in Umfangsrichtung um zumindest einen Teil des Gehäuses (17) erstreckt, wobei die Versteifungsarme (19) an ihren äußeren radialen Enden lösbare Befestigungsmittel (26) tragen, die mit komplementären Befestigungsmitteln (31, 32, 34) Zusammenwirken, die an einem inneren Flansch (30) zur Befestigung und Zentrierung des ringförmigen Mittelkörpers (14) der Leiteinrichtung (8) so angebracht sind, daß die Leiteinrichtung (8) und das Gehäuse (17) miteinander und beide gemeinsam im Kanal (6) starr befestigt sind.

2. Gegendrehmomentvorrichtung nach Anspruch 1, **dadurch gekennzeichnet**, daß die Leiteinrichtung (8) zumindest so viele Schaufeln (9) enthält, wie das Gehäuse (17) Versteifungsarme (19) aufweist, und daß jeder Arm (19) am Leiteinrichtungskörper (14) im wesentlichen radial innerhalb wenigstens eines Schaufelfußes (41) befestigt ist, der die entsprechende Schaufel (9) mit dem Leiteinrichtungskörper (14) verbindet.

3. Gegendrehmomentvorrichtung nach einem der Ansprüche 1 und 2, **dadurch gekennzeichnet**, daß die Versteifungsarme (19) in Umfangsrichtung abgeflacht sind, vom Gehäuse (17) zum Leiteinrichtungskörper (14) hin sowie von der Strömungsaufwärtsseite nach der Strömungsabwärtsseite des Kanals (6) geneigt sind und jeweils durch wenigstens eine von im wesentlichen radialen Rippen (20) von im wesentlichen dreieckiger Form verstärkt sind, die sich zur Strömungsabwärtsseite hin im Kanal (6) auf der Seite des Gehäuses (17) erstrecken und sich zum Leiteinrichtungskörper (14) hin verjüngen und in ihrer Anzahl im wesentlichen gleich sind mit den Schaufeln (9) der Leiteinrichtung.

4. Vorrichtung nach einem der Ansprüche 1 bis 3, **dadurch gekennzeichnet**, daß das Gehäuse (17) mit den Versteifungsarmen (19), der Felge (25), den Verstärkungsrippen (20) und den Mitteln (26) zur lösbaren Befestigung, die für jeden Arm (19) wenigstens einen radialen Lappen zur Schraubbefestigung (31, 34) am Befestigungs- und Zentrierflansch (30) des Leiteinrichtungskörpers (14) aufweisen, einstückig gegossen ist, wobei der Befestigungslappen (26) radial außerhalb der Felge (25) vorspringt.

5. Vorrichtung nach einem der Ansprüche 1 bis 4, **dadurch gekennzeichnet**, daß das Gehäuse (17) in Umfangsrichtung zwei nebeneinander liegende Versteifungsarme (19a, 19b) aufweist, die breiter sind und weiter voneinander entfernt sind als die anderen Arme (19) und nicht miteinander über die Felge (25) verbunden sind und die zwischen sich eine Aussparung (23) zum Durchführen eines Übertragungsarmes (16) abgrenzen, der sich mit dem Drehantriebsmechanismus (18) koppelt, indem er auch eine im ringförmigen Mittelkörper (14) vorgesehene und der Aussparung (23) des Gehäuses (17) gegenüberliegende seitliche Öffnung (38) durchquert.

6. Vorrichtung nach einem der Ansprüche 1 bis 5, **dadurch gekennzeichnet**, daß der ringförmige Leiteinrichtungskörper (14) mit einer Außenoberfläche von axialer Drehsymmetrie und zylindrischer und/oder kegelstumpfartiger Form, an der die Schaufelfüße (41) befestigt sind, den Flansch (30) zur Befestigung und Zentrierung des Gehäuses (30) an einem seiner strömungsabwärts und strömungsaufwärts liegenden Enden und einen zweiten Flansch (29) zur inneren und ringförmigen Versteifung an seinem anderen Ende aufweist.

7. Vorrichtung nach einem der Ansprüche 1 bis 6, **dadurch gekennzeichnet**, daß ein eine Verbindung zwischen dem Rotor (7) und dem Leiteinrichtungskörper (14) bildendes Winkelprofil (36) am Zentrier- und Befestigungsflansch (30) des Leiteinrichtungskörpers (14) durch die Befestigungsmittel (31, 34) gehalten wird, welche die Arme (19) des Gehäuses (17) an der Strömungsaufwärtsseite des Flansches (30) des Körpers (14) zu einem Stück vereinigen

8. Vorrichtung nach einem der Ansprüche 1 bis 7, **dadurch gekennzeichnet**, daß die Schaufeln (9) hohl sind und einzeln auf dem Leiteinrichtungskörper (14) und in lösbarer Weise an der seitlichen Wand (43) des Kanals (6) mit Hilfe von Befestigungslappen (44, 45) ihres Schaufelfußes (41) bzw. ihres Schaufelendes (42) angesetzt sind.

9. Vorrichtung nach Anspruch 8, **dadurch gekennzeichnet**, daß der oder die Befestigungslappen (44, 45) des Schaufelfußes (41) und/oder des Schaufelendes (42) mit dem profilierten Teil (40) der Schaufel (9) aus einem einzigen Stück sind.

10. Vorrichtung nach Anspruch 8, **dadurch gekennzeichnet**, daß der oder die Befestigungslappen (44', 44'', 45', 45'') des Schaufelfußes (41', 41'') und/oder des Schaufelendes (42', 42'') zu einem Ansatzstück vereinigt sind, das an dem entsprechenden Ende des profilierten Teils (40', 40'') der Schaufel (9', 9'') angesetzt ist.

11. Vorrichtung nach Anspruch 10, **dadurch gekennzeichnet**, daß wenigstens ein auf einer Schaufel (9'') angesetztes Ansatzstück (41'', 42'') ein in das entsprechende hohle Ende der Schaufel (9'') eingestecktes Ansatzstück ist.

12. Vorrichtung nach Anspruch 10, **dadurch gekennzeichnet**, daß wenigstens ein an einer Schaufel (9') angesetztes Ansatzstück (41', 42') ein Muffenansatzstück ist, in welches das entsprechende Ende der Schaufel (9') eingesetzt ist.

13. Vorrichtung nach einem der Ansprüche 8 bis 12, **dadurch gekennzeichnet**, daß die Schaufeln (9, 9', 9'') aus Verbundwerkstoff sind.

14. Vorrichtung nach Anspruch 13, **dadurch gekennzeichnet**, daß jede Verbundwerkstoff-Schaufel (9, 9', 9'') einen Schaumstoffkern enthält.

15. Vorrichtung nach einem der Ansprüche 13 und 14, **dadurch gekennzeichnet**, daß jede Verbundwerkstoff-Schaufel (9, 9', 9'') eine Schaufel ist, die mit einer Armierung gespritzt ist, die aus kurzen Verstärkungsfasern gebildet wird, die in einer Matrix aus synthetischem Versteifungsharz eingelassen sind.

16. Vorrichtung nach einem der Ansprüche 13 und 14, **dadurch gekennzeichnet**, daß jede Verbundwerkstoff-Schaufel (9, 9', 9'') eine Schaufel ist, die durch Auftragen eines Epoxidharzes auf Fasergewebe geformt ist.

17. Vorrichtung nach einem der Ansprüche 13 und 14, **dadurch gekennzeichnet**, daß jede Verbundwerkstoff-Schaufel (9, 9', 9'') durch Aufbereitung von Fasergeweben ausgeführt ist, die mit einem synthetischen Versteifungsharz vorgetränkt sind.

18. Vorrichtung nach einem der Ansprüche 1 bis 7, **dadurch gekennzeichnet**, daß die Schaufeln (59) und der Leiteinrichtungskörper (64) aus einem einzigen Stück aus Verbundmaterial bestehen.

19. Vorrichtung nach Anspruch 18, **dadurch gekennzeichnet**, daß die Verbundwerkstoff-Leiteinrichtung (58) ein Blockgußstück ist, das durch Komprimierung geformt wird und eine Armierung aus kurzen Verstärkungsfasern enthält, die in einer synthetischen Versteifungsmatrix eingelassen sind.

20. Vorrichtung nach einem der Ansprüche 18 und 19, **dadurch gekennzeichnet**, daß sich jede Schaufel (59) der Verbundwerkstoff-Leiteinrichtung (58) innerhalb des ringförmigen Mittelkörpers (64) durch eine Rippe (71) fortsetzt, die sich axial vom Befestigungs- und Zentrierflansch (70) im wesentlichen an einem der axialen Enden des Mittelkörpers (64) im wesentlichen bis zum anderen axialen Ende des ringförmigen Mittelkörpers (64) erstreckt.

21. Vorrichtung nach einem der Ansprüche 1 bis 20, **dadurch gekennzeichnet**, daß die Schaufeln (9, 9', 9'', 59) vom Leiteinrichtungskörper (14, 64) zur Wand (43) des Kanals (6) hin in bezug auf die Radialrichtung geneigt sind und zwar in der Richtung entgegen dem Drehsinn des Rotors (7) und/oder von der Strömungsaufwärtsseite nach der Strömungsabwärtsseite des Kanals (6) gepfeilt sind.

22. Vorrichtung nach einem der Ansprüche 1 bis 21, **dadurch gekennzeichnet**, daß jede Schaufel (9) mit der seitlichen Wand (43) des Kanals (6) durch Befestigung ihres Schaufelendes (42) an einem in der Wand (43) des Kanals (6) gekapselten Einsatz (46) verbunden ist.

23. Vorrichtung nach Anspruch 22, **dadurch gekennzeichnet**, daß der Einsatz (46) ein aus eingespritztem plastischem Material geformtes Stück ist, das mit kurzen Verstärkungsfasern armiert ist und eine ebene Befestigungsfläche (49), die im wesentlichen in der Innenfläche der Wand (43) des Kanals (6) versenkt ist, sowie einen zylindrischen Körper mit äußeren Umfangsrippen zur Verankerung in der Wand (43) aufweist.

24. Vorrichtung nach einem der Ansprüche 1 bis 23, **dadurch gekennzeichnet**, daß die seitliche Wand (43) des Kanals (6) ein einziges Stück in Verbundwerkstoff-Sandwichanordnung ist, das zwischen zwei ringförmigen Randleisten (51, 52) zur Verbindung mit zwei seitlichen Verbundwerkstoff-Verkleidungen (53) des Tragkörpers (5) und in der Reihenfolge von der Strömungsaufwärtsseite nach der Strömungsabwärtsseite eine Eintrittskonvergenz (10), einen zylindrischen Teil (11) und eine Divergenz (12) aufweist, an welchen die Schaufeln (9) befestigt sind, und das eine innere Verkleidung (54) und eine äußere Verkleidung (55) umfaßt, zwischen welchen sich eine wabenförmige Schicht (56) erstreckt, deren Dicke in der Divergenz (12) größer ist als diejenige in der Konvergenz (10) und dem zylindrischen Teil (11), wobei jeweils die innere und äußere Verkleidung (54, 55), jede der Leisten (51, 52) und jede der seitlichen Verkleidungen (53) ein Schichtstoff aus wenigstens zwei übereinander liegenden Matten aus Stoffen aus mit einen synthetischen Tränkharz versteiften Fasergeweben ist, wobei die innere Verkleidung (54) von einer größeren Dicke als diejenige der äußeren Verkleidung (55) ist, welche ihrerseits von größerer Dicke als diejenige der seitlichen Verkleidungen (53) ist.
